# EUROPEAN PATENT APPLICATION

(11) **EP 1 792 855 A1**
(43) Date of publication of application: **06.06.2007**
(21) Application number: 06256174.1
(22) Date of filing: 04.12.2006
(51) Int. Cl.: B65G 13/11, B65G 13/12

(54) **Debris cap for roller-way conveyor**

(30) Priority: 05.12.2005 GB 0524792
(71) Applicant: Joloda (International) Ltd, Garston, Liverpool L19 2NY (GB)
(72) Inventor: Kordel, Thomas c/o Joloda (International) Ltd, Garston Liverpool, L19 2NY (GB)
(74) Representative: Pingree, Oliver Norman

(57) **Abstract**

There is disclosed a debris cap 100 for roller-way conveyors. The debris cap 100 closes off the ends of a channel-shaped body 120, thus preventing debris inside the channel-shaped body 120 from escaping the ends. The debris cap 100 gas a pair of side arms 220, 221 with recesses 230, 231 for engaging with an axle 130 (the axle 130 holds a roller 140). A floor 120 of the debris cap 100 substantially forms a seal with the bottom 150 of the channel-shaped body 120, thus closing off the ends of the channel-shaped body 120.

## Description

The present invention relates to roller-way conveyors and, more particularly but exclusively, to single roller-way conveyors.

Roller-way conveyors are known for material handling inside, for example, lorries or aircraft. An example of a roller-way conveyor is known from GB 2378692 which shows a double roller-way conveyor (a double roller-way conveyor is a roller-way conveyor having two rollers per axle).

Some types of retractable roller-way conveyors use an air bag to raise or lower a channel-shaped body which supports the rollers. When an air bag is deflated, the channel-shaped body is lowered and the rollers are retracted below a support surface, thereby allowing cargo items carried by the rollers to rest on a support surface (the support surface is provided with apertures to allow the rollers to project through the support surface). When the air bag is inflated, the channel-shaped body is raised, causing the rollers to project through the apertures in the support surface and thus lifting cargo items off the support surface, thereby enabling the cargo items to be slid over the rollers.

In such roller-way conveyors, debris can pass through gaps between the apertures and the rollers. Any such debris will come to rest in the channel-shaped body and, due to vibration, may travel to an end of the channel-shaped body, exit the channel-shaped body, and come into contact with the air bag, eventually puncturing of the air bag.

The present invention seeks to overcome disadvantages with prior art roller-way conveyors. In particular, the present invention seeks to provide an apparatus to allow prior art roller-way conveyors to be modified by retro-fitting so as to reduce problems with debris causing air bag puncture.

According to an aspect of the present invention, there is provided a debris cap as set out at claim 1.

According to another aspect of the present invention, there is provided a roller-way conveyor as set out at claim 6.

According to another aspect of the present invention, there is provided a method of fitting a roller-way conveyor with a debris cap as set out at claim 15.

As well as reducing the effect of debris, another advantage of the present invention is that is can be retro-fitted to a roller-way conveyor without requiring the rollers or axles to be removed from the channel-shaped body.

### Description of Figures

Figure 1 shows a perspective view of a debris cap mounted to a channel-shaped body.
Figure 2 shows a perspective view of the debris cap of Figure 1.
Figure 3a shows a debris cap being clipped to a roller axle.
Figure 3b shows the roller cap after being rotated around the roller axle, and abutting a channel-shaped body.
Figure 4 shows a web that may be folded to produce the debris cap of Figure 1.
Figure 5 shows, in a view corresponding to Figure 3b, an alternative embodiment of a debris cap.

### Detailed description of an embodiment

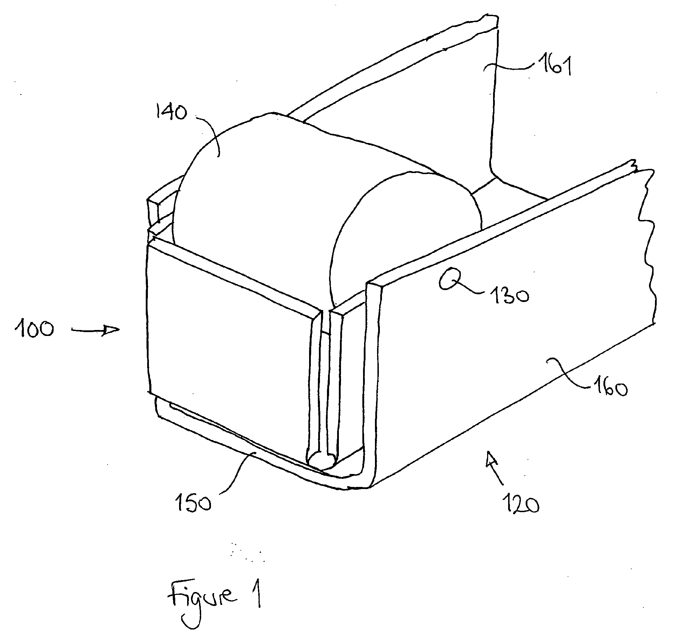

Figure 1 shows a debris cap 100 mounted to a channel-shaped body 120. An axle 130 is mounted to the channel-shaped body 120 and supports a roller 140. The channel-shaped body 120 has a generally "U" shaped" cross-sectional profile including upstanding sidewalls 160, 161 and a bottom 150 between the sidewalls 160, 161. The debris cap 100 fits between the sidewalls 160, 161 of the channel-shaped body 120.

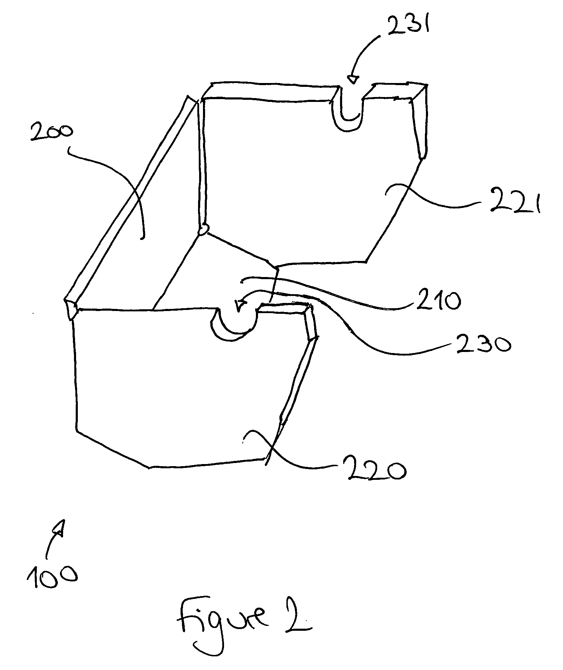

Figure 2 shows a perspective view of the debris cap 10 of Figure 1. The debris cap 100 has a back 200, a floor 210 and two side arms 220, 221 having respective recesses 230, 231.

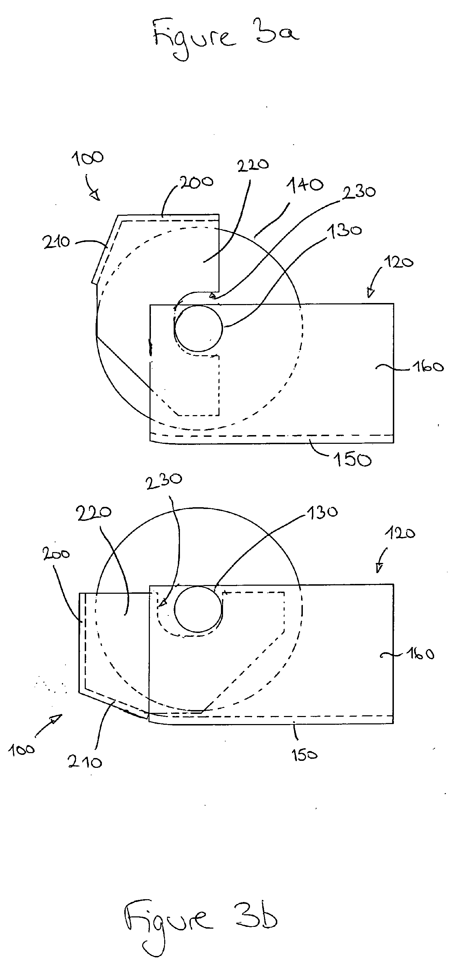

Figure 3a shows the debris cap 100 being clipped to an axle 130 as part of a method of mounting the debris cap 100 to the channel-shaped body 120. With the back 200 of the debris cap 100 being held uppermost and in a horizontal plane, the debris cap 100 is moved relative to the longitudinal axis of the channel-shaped body 120 so that the ends of the axle 130 are received by the recesses 230, 231. The debris cap 100 is then rotated around the axle 130.
Figure 3b shows the debris cap 100 after rotation around the axle 130. The back 200 of the debris cap 100 is now in a vertical plane. An edge of the floor 210 of the debris cap 100 abuts an edge of the bottom 150 of the channel-shaped body 120. In this embodiment, the floor 210 is angled by 20° relative to the bottom 150 of the channel-shaped body 120.
   Thus debris inside the channel-shaped body 120 can no longer fall out of the end of the channel-shaped body 120 (and towards an air bag, not shown) as debris is prevented from doing so by the back 200 and floor 210. The recesses 230, 231 engage with the axle 130 to prevent movement of the debris cap 100 relative to the longitudinal axis of the channel-shaped body 120.

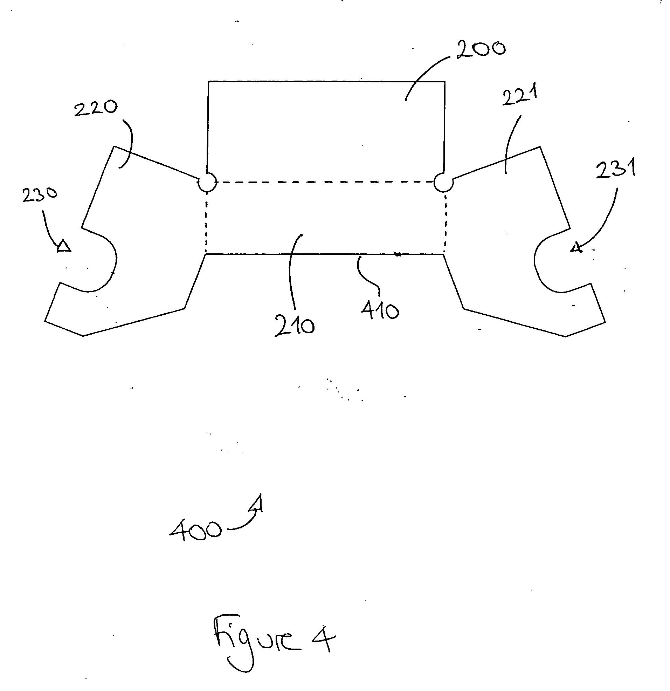

Figure 4 shows a web 400 that may be folded to produce the debris cap 100 of Figure 1. Phantom lines are used to delimit the portions of the web 400 that form the back 200, floor 210, side arms 220, 221 and recesses 230, 231. In this embodiment, the web 400 is mild steel.

In Figure 4, an edge 410 of the portion of the web 400 that forms the floor 210 has been denoted by the reference sign 410. With reference to Figure 3b, it is the edge 410 of the floor 210 that abuts the edge of the bottom 150 of the channel-shaped recess 120. Also in Figure 4, edges 420, 421 of the portions of the web 400 that form the side arms 220, 221 are denoted by the reference signs 420, 421. With reference to Figure 3b, it can be seen that the edges 420, 421 are parallel to the bottom 150 of the channel-shaped body 120 and are spaced apart from the bottom 150 of the channel-shaped body 120.

### Alternative embodiments

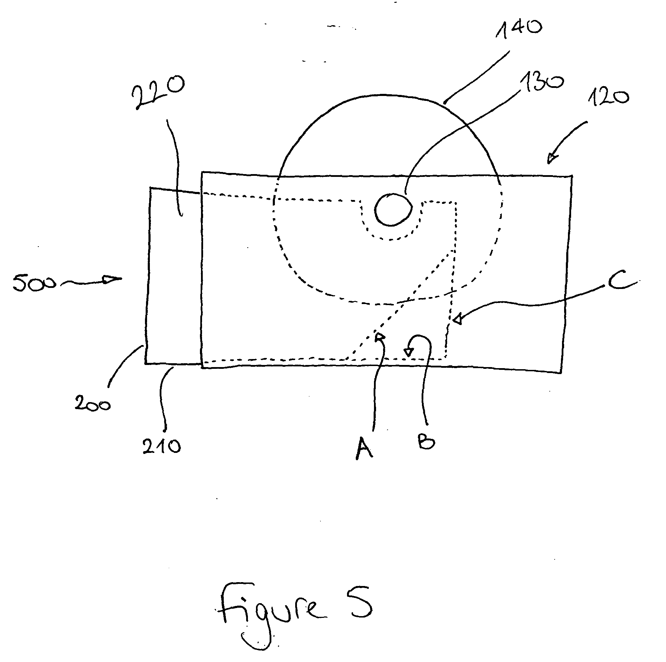

An alternative embodiment of a debris cap is shown at Figure 5. In this embodiment, the debris cap 500 is arranged so that, in use, the floor 210 lies against and parallel to the bottom 150 of the channel-shaped body 120. In this embodiment, the side arms 220, 221 terminate at line "A". In a further embodiment, the side arms 220, 221 terminate at lines "B" and "C" instead of at line "A". For the further embodiment, the floor 210 does not lie parallel to the bottom 150 of the channel-shaped body 120; this is because further rotation of the debris cap about the axle 130 is prevented by the portion of the side arms 220, 221 at the intersection of lines "B" and "C". Thus for the further embodiment, the moment of the debris cap 500 about the axle 130 urges, due to gravity, the portion of the side arms 220, 221 at the intersection of the lines "B" and "C" into continual contact with the bottom 150 of the channel-shaped body 120.

In another embodiment, not shown, the axle 120 protrudes at each end beyond the upstanding sidewalls 160, 161 of the channel-shaped body 120. This allows an alternative embodiment, not shown, of the debris cap to be fixed around the exterior of the channel-shaped body 120 (in contrast, it will be recalled from Figure 1 that there the debris cap 100 was fitted in between the upstanding sidewalls 160, 161 of the channel-shaped body 120). In such an embodiment, the floor 120 of the debris cap will engage with the exterior surface rather than the interior surface of the bottom 150 of the channel-shaped body 120.

In embodiments shown above, a pair of side arms 220, 221 were used. In alternative embodiments, a single side arm 220 is used instead of a pair. As the skilled man will appreciate, suitable modifications may be made to the shape of such a debris cap in order to control the yaw, pitch and roll of the debris cap relative to the channel-shaped body 120.

In embodiments shown above, the debris caps has both a back 200 and a floor 210. In alternative embodiments, debris caps may have only a floor 210; provided the floor 210 is angled sufficiently upwards relative to the bottom of the channel-shaped body 120 then debris will not be able to escape the channel-shaped body 120. In yet further embodiments the floor 210 may be extended away from the recesses 230, 231 so that the floor 120 acts, in effect, as a back 200.

With reference to Figure 4, in some embodiments the edge 410 may be fitted with a rubber seal (not shown) to form a seal with the channel-shaped body 120. In some situations the rubber seal may be used to further reduce the amount of debris which comes into contact with the air bag (not shown).

Figure 4 showed a web 400 for forming a debris cap from corrosion protected sheet steel. In alternative embodiments, thicker material may be used, provided that the side arms 220, 221 are made sufficiently thin to pass through the gap between the roller 140 and the inside surfaces of the upstanding sidewalls 160, 161 of the channel-shaped body 120.

In embodiments described above, the bottom 150 of the channel-shaped body 120 was generally flat and arranged in a horizontal plane. In alternative embodiments, the bottom 150 of the channel-shaped body may be non-planar and may, for example, be shaped as a "V". Such roller-way conveyors may require a corresponding modification to the floor of the debris cap (for example to a "V" shape") so that the floor of the debris cap conforms to the bottom of the channel-shaped body 120. The fit between the floor of the debris cap and the bottom of the channel-shaped body need not be perfect although a good fit is preferred as a gap between the floor and bottom may allow debris particles smaller than the gap to pass through the gap and towards an air bag.

Furthermore, the floor of the debris cap and the bottom of the channel-shaped body 120 need not have the same shape, provided that the size of a gap is minimised. For example, suppose that the bottom of the channel-shaped body 120 has a "V" shape. In an alternative embodiment, a debris cap having a planar floor may be used to close of the "V" shaped end of the channel-shaped body 120. In such an embodiment, the debris cap is arranged so that the floor, when adjacent the bottom, is in a generally vertical plane and thus is in the same plane as the "V" of the channel-shaped body 120 (in contrast, Figure 3b showed an arrangement in which the floor 210 was only inclined about 20° up from horizontal).

In one embodiment, the debris cap 100 closes off the ends of a channel-shaped body 120, thus preventing debris inside the channel-shaped body 120 from escaping the ends. The debris cap 100 gas a pair of side arms 220, 221 with recesses 230, 231 for engaging with an axle 130 (the axle 130 holds a roller 140). A floor 120 of the debris cap 100 substantially forms a seal with the bottom 150 of the channel-shaped body 120, thus closing off the ends of the channel-shaped body 120.

## Claims

1. A debris cap for a roller-way conveyor, comprising:
a side arm having a recess for receiving an axle; and
a floor for engaging a bottom of a channel-shaped body.

2. A cap according to claim 1, comprising a pair of side arms, and/or a back.

3. A cap according to claim 1 or 2, formed from a web.

4. A cap according to any one of claims 1 to 3, wherein the floor comprises an elastomeric portion for engaging with the bottom of the channel-shaped body.

5. A roller-way conveyor comprising:
a channel-shaped body;
an axle;
a roller; and
a debris cap according to any one of claims 1 to 4,
wherein the recess, or recesses, of the side arm, or arms, receives the axle, and
wherein the floor is engaged with the bottom of the channel-shaped body.

6. A conveyor according to claim 5, wherein the debris cap has a moment about the axle and wherein the moment urges the floor against the bottom of the channel-shaped body.

7. A conveyor according to claim 5 or claim 6, wherein an edge of the floor abuts an edge of the bottom of the channel-shaped body, and/or wherein the roller-way conveyor comprises a single roller per axle, and/or wherein the debris cap is received inside the channel-shaped body.

8. A conveyor according to any one of claims 5 to 7, comprising an air bag for moving the channel-shaped body, and/or comprising two debris caps, one at each end of the channel-shaped body.

9. A vehicle, such as a lorry, comprising a roller-way conveyor according to any one of claims 5 to 8.

10. A method of fitting a roller-way conveyor with a debris cap according to any of claims 1 to 4, wherein the roller-way conveyor comprises a channel-shaped body, an axle and a roller, comprising the steps of:
engaging a recess with the axle;
rotating the debris cap around the axle until the floor engages the bottom of the channel-shaped body.
